Europäisches Patentamt

**(19)** European Patent Office

Office européen des brevets

**(11)** Numéro de publication : **0 305 233 B1**

**(12)** # FASCICULE DE BREVET EUROPEEN

**(45)** Date de publication du fascicule du brevet :
**25.09.91 Bulletin 91/39**

**(51)** Int. Cl.⁵ : **G01P 3/489, G01P 3/50**

**(21)** Numéro de dépôt : **88401853.2**

**(22)** Date de dépôt : **18.07.88**

**(54)** Dispositif pour déterminer les valeurs des vitesses instantanées d'un objet mobile.

**(30)** Priorité : **20.07.87 FR 8710216**

**(43)** Date de publication de la demande :
**01.03.89 Bulletin 89/09**

**(45)** Mention de la délivrance du brevet :
**25.09.91 Bulletin 91/39**

**(84)** Etats contractants désignés :
**CH DE GB IT LI SE**

**(56)** Documents cités :
**EP-A- 0 059 433
IEEE TRANSACTIONS ON INDUSTRY APPLI-
CATIONS, vol. 19, no. 6, novembre/décembre
1983, pages 1052-1056, IEEE, New York, US; R.
BONERT: "Digital tachometer with fast dynamic response implemented by a microprocessor"**

**(73)** Titulaire : **COMMISSARIAT A L'ENERGIE
ATOMIQUE Etablissement de Caractère
Scientifique Technique et Industriel
31/33, rue de la Fédération
F-75015 Paris (FR)**

**(72)** Inventeur : **Bertin, François
46, Avenue Marcellin Berthelot
F-38100 Grenoble (FR)**
Inventeur : **Chabli, Amal
1, rue du Docteur Calmette
F-38130 Echirolles (FR)**
Inventeur : **Mellan, Alain
7, rue du Rachais
F-38240 Meylan (FR)**

**(74)** Mandataire : **Mongrédien, André et al
c/o BREVATOME 25, rue de Ponthieu
F-75008 Paris (FR)**

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

La présente invention concerne un dispositif pour déterminer les valeurs des vitesses instantanées d'un objet mobile.

Cette invention s'applique à la mesure des vitesses instantanées, notamment dans un ensemble fonctionnel pour lequel la vitesse d'un élément de cet ensemble est un paramètre essentiel au bon fonctionnement de cet ensemble. Cet ensemble peut être par exemple une machine outil dans laquelle la vitesse de déplacement de broche est un paramètre important, une machine de tirage de monocristaux dans laquelle la vitesse de déplacement de la broche de tirage conditionne la qualité du monocristal obtenu, etc.

On sait que dans ces ensembles, les dispositifs qui permettent de commander la vitesse de déplacement de la broche, n'utilisent pas la vitesse réelle de celle-ci mais la vitesse que l'on souhaite obtenir grâce à l'intervention du dispositif.

Dans de tels ensembles, il n'est donc pas tenu compte des fluctuations de vitesses dues à des défauts mécaniques par exemple, de l'ensemble commandé.

L'invention a pour but de remédier à ces inconvénients et notamment de réaliser un dispositif permettant de déterminer les vitesses instantanées d'un objet mobile, ce dispositif permettant dans un ensemble pour lequel des moyens sont prévus pour commander la vitesse de déplacement de cet objet, d'utiliser précisément les valeurs des vitesses instantanées de cet objet, et non pas seulement les vitesses commandées.

L'invention a pour objet un dispositif pour déterminer les valeurs des vitesses instantanées d'un objet mobile, comprenant un capteur de position de l'objet mobile fournissant un signal analogique représentatif des positions de l'objet mobile, un convertisseur analogique-numérique relié au capteur, le convertisseur fournissant des valeurs numériques représentatives des positions de l'objet mobile en fonction du temps déterminé par le séquenceur, et des moyens de calcul reliés au convertisseur et au séquenceur pour calculer les vitesses instantanées de l'objet pour différentes positions, caractérisé en ce que les moyens de calcul comportent un calculateur relié à une mémoire, au convertisseur et au séquenceur pour acquérir et enregistrer dans la mémoire des valeurs numériques représentatives d'intervalles de temps successifs égaux, fournies par le séquenceur, ainsi que des valeurs numériques correspondant respectivement aux distances parcourues par l'objet en déplacement durant ces intervalles de temps, la mémoire contenant un premier programme dit de filtrage de valeurs numériques pour corriger parmi les valeurs celles qui correspondent à des fluctuations des valeurs numériques correspondant aux distances parcourues dont les fréquences sont supérieures à une fréquence de coupure prédéterminée, pour supprimer les bruits de mesure et un deuxième programme dit de différentiation, pour calculer les valeurs de vitesses instantanées de l'objet à partir des valeurs numériques enregistrées et filtrées de distances et d'intervalles de temps.

Selon une autre caractéristique, le séquenceur comporte un compteur et une horloge reliés au calculateur et reliés entre eux, les valeurs numériques correspondant auxdits intervalles de temps successifs égaux étant fixées à une valeur prédéterminée de manière que les distances théoriquement parcourues par l'objet en déplacement durant ces intervalles de temps correspondent à des valeurs numériques fixées indépendemment de la vitesse de déplacement de l'objet effectivement commandée, le compteur commandant l'enregistrement dans la mémoire des valeurs numériques qui sont représentatives des distances parcourues par l'objet en déplacement durant ces intervalles de temps et qui sont délivrées par le convertisseur analogique-numérique.

On notera que la distance théoriquement parcourue par l'objet en déplacement, est celle qui serait parcourue par cet objet pendant l'intervalle de temps considéré, si la vitesse réelle de déplacement de l'objet correspondait à la vitesse de référence choisie. La valeur de la vitesse théorique correspond en fait à la vitesse imposée ou commandée, de la broche. On mesure, pour des intervalles de temps identiques, la distance parcourue qui diffère légèrement de la distance théorique déduite de la vitesse théorique. Ces intervalles de temps sont prédéterminés par la valeur de la vitesse imposée à l'objet ou à la broche. Le choix de ces intervalles de temps, pour une vitesse théorique donnée, est fait de telle sorte que la distance parcourue par la broche soit mesurable par un capteur de déplacement. (La résolution du capteur doit être inférieure à la distance à mesurer).

Les caractéristiques et avantages de l'invention ressortiront mieux de la description qui va suivre, donnée en référence aux dessins annexés dans lesquels :

— la figure 1 représente schématiquement un dispositif pour déterminer la valeur des vitesses instantanées d'un objet mobile, conforme à l'invention,

— la figure 2 est un diagramme permettant de mieux comprendre certaines opérations de filtrage de valeurs numériques utilisées dans le dispositif de l'invention.

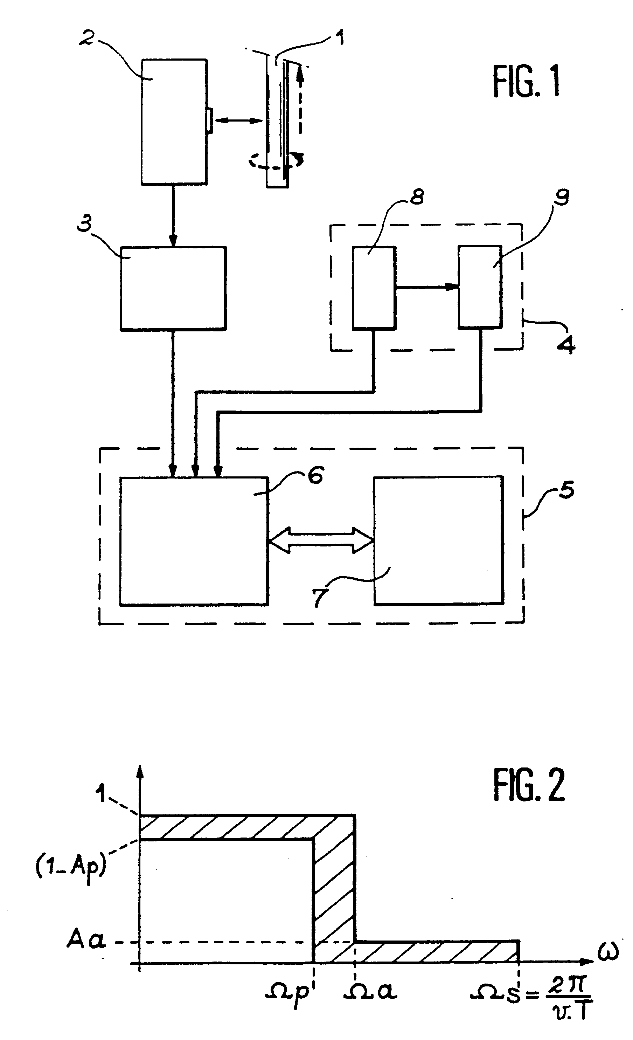

Sur la figure 1, on suppose que l'objet mobile, dont on veut déterminer la vitesse instantanée, est par exemple la broche mobile 1 d'une machine de tirage de monocristaux (non représentée) utilisant le procédé de CZOCHRALSKI.

Selon ce procédé de tirage et de façon connue, il est nécessaire, pour obtenir un monocristal présentant des paramètres physiques souhaités, d'effectuer ce tirage en trempant dans un bain de produits fondus, un germe placé à l'extrémité de la broche 1 mobile en rotation et en translation. La qualité du monocristal obtenu dépend, non seulement de la température du bain, mais aussi des vitesses de rotation et de translation de la broche. Le dispositif de l'invention permet notamment de mesurer les vitesses instantanées de translation de la broche.

Le dispositif comprend un capteur 2 de position de l'objet mobile, fournissant un signal analogique représentatif des positions de cet objet. Ce capteur peut être par exemple, dans l'application choisie, une règle optique commercialisée par HEIDENHAIN. Ce capteur de type connu fournit un signal analogique sur une sortie reliée à un convertisseur analogique-numérique 3.

Le dispositif comprend aussi des moyens de calcul 5 comprenant un calculateur 6 et une mémoire 7. Le calculateur 6 est relié au convertisseur 3 et au séquenceur 4 pour calculer les vitesses instantanées de l'objet mobile (la broche 1 dans l'exemple considéré), à partir des valeurs numériques reçues du convertisseur 3, ces valeurs étant représentatives des positions de l'objet mobile en fonction du temps déterminé, comme on le verra plus loin en détail, par le séquenceur 4.

Le calculateur 6 commande l'acquisition et l'enregistrement dans la mémoire 7 des valeurs numériques correspondant à des distances successives parcourues par la broche en déplacement. Ce calculateur permet aussi l'enregistrement de valeurs numériques représentatives des intervalles de temps, fournis par le séquenceur, et correspondant respectivement aux temps de parcours de ces distances successives égales. C'est ainsi par exemple que si un intervalle de temps $\Delta_t$ s'est écoulé, auquel correspond une valeur numérique prédéterminée, le calculateur permet l'enregistrement de cette valeur numérique prédéterminée, ainsi que l'enregistrement de la valeur numérique correspondant à la distance $\Delta_x$ parcourue par l'objet en déplacement durant cet intervalle de temps et délivrée par le convertisseur 3. Un intervalle de temps $\Delta_t$ égal au précédent s'écoule à nouveau, et le calculateur permet d'enregistrer, grâce au séquenceur, la distance correspondante, parcourue par l'objet en déplacement, qui est identique à la distance précédente, parcourue par l'objet en déplacement, si la vitesse de déplacement n'a pas varié.

Le séquenceur 4 comporte un compteur 8 relié au calculateur 6 et à une horloge 9, elle-même reliée au calculateur 6.

Les valeurs numériques correspondant aux intervalles de temps successifs et égaux sont fixées par une valeur prédéterminée de comptage du compteur 8, qui peut être réglable. Ce compteur commande l'enregistrement dans la mémoire 7 de cette valeur prédéterminée de comptage, ainsi que de la valeur numérique fournie au calculateur 6 par le convertisseur analogique-numérique 3 pour chaque intervalle de temps prédéterminé. La valeur numérique, fournie au calculateur par le convertisseur et enregistrée dans la mémoire, correspond à la distance effective parcourue par l'objet en déplacement durant cet intervalle de temps, pour chaque intervalle de temps prédéterminé.

La mémoire 7 reliée au calculateur 6 permet d'enregistrer les valeurs numériques indiquées plus haut ainsi que des programmes de traitement de ces valeurs numériques. La mémoire contient notamment un premier programme qui peut être qualifié de programme de filtrage de valeurs numériques. Ce programme permet, comme on le verra plus loin en détail, de corriger les variations ou fluctuations des valeurs numériques correspondant aux distances successives parcourues, ces fluctuations ayant des fréquences supérieures à une fréquence de coupure prédéterminée.

La mémoire contient aussi un deuxième programme, dit de différentiation qui permet, comme on le verra plus loin en détail, de calculer les valeurs de vitesse instantanée de l'objet, à partir de valeurs numériques de distance et d'intervalle de temps correspondants, enregistrés grâce au programme de filtrage précédent.

Le traitement résultant du premier programme correspond en fait à l'action d'un filtre passe-bas présentant une pulsation de coupure $\omega_p$. Ce programme est défini à partir d'une analyse spectrale des signaux numériques relatifs au déplacement de l'objet (la broche de tirage dans l'exemple considéré). Pour cette analyse spectrale, les signaux numériques relatifs aux déplacements de la broche, ainsi que les signaux numériques relatifs aux intervalles de temps correspondants, sont échantillonnés de sorte qu'entre deux mesures successives, le déplacement théorique de la broche soit égal à une quantité constante minimale, compatible avec la résolution du capteur de déplacement. La période T d'échantillonnage dépend donc de la vitesse de translation commandée de la broche, qui est constante dans une analyse spectrale préalable des valeurs numériques fournies par le convertisseur et par l'horloge.

La pulsation $\omega_p$ est proportionnelle à la fréquence maximum pour laquelle le programme de différentiation des valeurs numériques, doit avoir une action.

En toute rigueur, pour chaque vitesse de translation ou de déplacement de l'objet, il devrait être défini un filtre numérique adapté. Cette procédure alourdit considérablement les traitements à effectuer dans le cas de vitesses de translation variables, par exemple dans l'application du dispositif à la détermination des vitesses

3

instantanées de broche, dans une machine de tirage de monocristaux.

Pour s'affranchir de cette difficulté, on définit tout d'abord une pulsation réduite : $\Omega = \omega/v$. Dans cette relation, v désigne la vitesse théorique de déplacement de l'objet qui est la vitesse de consigne prédéterminée.

La définition d'une pulsation réduite permet de choisir un gabarit de filtrage, en fonction de la fréquence réduite correspondante, indépendamment de la vitesse de translation.

C'est à partir de cette pulsation réduite que l'on définit le gabarit du filtre passe-bas que l'on souhaite obtenir. Le gabarit est un domaine définissant le gain du filtre en fonction de la pulsation ou de la fréquence. Pour définir un filtre, on cherche, de façon connue, à déterminer mathématiquement une fonction de transfert qui satisfait le gabarit imposé. En fait, la fonction de transfert impose un gain du filtre situé dans le gabarit.

La figure 2 représente schématiquement le gabarit d'un filtre que l'on souhaite utiliser dans le dispositif de l'invention.

Sur cette figure, pour ce filtre, on désigne par :

$A_p$ : minimum de gain en bande passante.
$A_a$ : minimum de gain en bande coupée.
$\Omega_a$ : la pulsation réduite d'échantillonnage,
$\Omega_p$ : la pulsation réduite de fin de bande passante,
$\Omega_a$ : la pulsation réduite de début de bande coupée.

La bande coupée désigne l'intervalle de fréquences éliminées des mesures tandis que la bande passante désigne l'intervalle de fréquences conservées dans les mesures.

Les paramètres $A_a$ et $A_p$ sont indépendants de la vitesse de translation de l'objet.

Le gain obtenu par le calcul doit être confiné dans le domaine hachuré. Le choix de $A_a$, $A_p$, $\Omega_a$, $\Omega_p$, $\Omega_a$ est fait lors de la phase d'analyse spectrale.

Le filtre est ensuite dénormalisé en ligne, en fonction de la vitesse de translation commandée de l'objet. Le paramètre permettant cette dénormalisation est la période d'échantillonnage T du signal de déplacement de broche. Cette période est en fait fournie sous forme d'une valeur numérique, par la sortie de l'horloge 9. Elle s'exprime par la relation :

$$T = (2\pi)/(\Omega_a \cdot v).$$

Le filtre est alors défini par des coefficients $(a_i^j)_{i,j}$ et $(b_i^j)_{i,j}$ de sa fonction de transfert F(Z) qui s'écrit :

$$F(Z) = \prod_{i=1}^{q} \frac{a_i^0 + a_i^1 Z + a_i^2 Z^2}{b_i^0 + b_i^1 Z + b_i^2 Z^2}$$

Le calcul des paramètres définis plus haut n'est pas expliqué ici en détail, car il est bien connu dans l'état de la technique.

Dans cette relation, Z est l'opérateur retard. Lors du changement de vitesse de translation, les pulsations $\Omega_a$, $\Omega_p$, $\Omega_a$, subissent un homothétie de rapport v qui n'affecte pas les coefficients $(a_i^j)_{i,j}$ et $(b_i^j)_{i,j}$. Par contre, la période d'échantillonnage T du déplacement de broche doit être adaptée conformément à la relation :

$$T = \frac{2\pi \cdot v}{\Omega_s}$$

Dans la relation qui donne la fonction de transfert du filtre, désigne le nombre de cellules biquadratiques de filtrage.

Le filtrage proprement dit est effectué selon une routine connue dite de filtre récursif dans laquelle le filtre intervient cellule biquadratique par cellule biquadratique. L'application de la i + 1ème cellule biquadratique au dernier résultat otenu de la ième cellule est décrite par la relation suivante :

$$Y_{i+1}(n) = \sum_{j=0}^{2} a^{j}_{i+1} Y_i(n-j) - \sum_{j=1}^{2} b^{j}_{i+1} Y_{i+1}(n-j)$$

Cette relation exprime le résultat du filtrage pour l'échantillon de rang n, c'est-à-dire à l'instant nT.

Le résultat global du filtrage est exprimé par $Y_p(n)$. Le filtrage des valeurs numériques fournies par le convertisseur 3 et le séquenceur 4, ainsi obtenu grâce au premier programme contenu dans la mémoire 7 du calculateur 6, est suivi d'un calcul de la vitesse instantanée de déplacement de l'objet, ou de la broche dans l'exemple considéré, grâce au deuxième programme contenu dans la mémoire 7.

La vitesse instantanée V(n) de déplacement de l'objet est obtenue à partir des valeurs filtrées $Y_p(n)$, suivant l'algorithme de différentiation :

$$V(n) = \frac{Y_p(n) - Y_p(n-m)}{mT}$$

Dans cette relation, la valeur m est choisie de façon compatible avec la pulsation de bande passante dénormalisée donnée par la relation : $\omega_p = \Omega_p \cdot V$, de telle sorte que : $(\pi/mT) \leq \omega_p$ ou encore $m \leq (\Omega_e/2\Omega_p)$.

Dans la relation :

$$V(n) = \frac{Y_p(n) - Y_p(n-m)}{mT}$$

$V_{(n)}$ représente la suite des échantillons résultant de la différentiation et représentant la vitesse instantanée de l'objet, T la période d'échantillonnage et m un entier positif caractérisant l'algorithme de différentiation.

La fonction de transfert du filtre correspondant à cet algorithme est donnée par l'expression :

$$F(\omega) = \frac{2je^{-mj\omega T/2}}{mT} \sin(m\omega T/2)$$

Pour $\omega$ voisin de 0, la fonction de transfert $F(\omega)$ est sensiblement égale à $j\omega$.

Ce filtre se comporte en dérivateur pur en basse fréquence, dans un domaine d'autant plus large que la valeur de m est faible.

Ce filtre a un gain variant sinusoidalement avec la fréquence et agit sur toute la bande d'analyse $(0, \pi/T)$.

L'application d'un tel calcul de différentiation, directement sur les signaux numériques de déplacements de broche aurait conduit à une dérivée inexploitable. Le filtrage réalisé plus haut permet de remédier à cet inconvénient. Les fréquences hors du domaine de validité de l'algorithme de différentiation sont éliminées par le filtrage.

Ce dispositif permet, notamment dans des appareils pour lesquels la vitesse de déplacement de l'un des éléments de cet appareil est un paramètre important, de tenir compte des fluctuations de vitesses instantanées, dues à des défauts mécaniques par exemple.

La dénormalisation en ligne du filtre numérique rend les paramètres de calcul de la vitesse de translation indépendants de cette vitesse et, par suite, le calcul de la vitesse instantanée est indépendante des conditions de conduite du processus dans lequel le dispositif intervient.

Ce dispositif peut être utilisé dans des ensembles de tirage de monocristaux, notamment selon la méthode CZOCHRALSKI, dans le tirage de monocristaux de matériaux semiconducteurs, de monocristaux dopés ou même de monocristaux de matériaux dopés par un élément dont le coefficient de ségrégation est très différent de 1. Cette invention s'applique aussi aux machines outils dans lesquelles la vitesse de translation de broche est un paramètre très important.

## Revendications

1. Dispositif pour déterminer les valeurs des vitesses instantanées d'un objet mobile (1), comprenant un capteur (2) de position de l'objet mobile fournissant un signal analogique représentatif des positions de l'objet mobile, un convertisseur analogique-numérique (3) relié au capteur, le convertisseur (3) fournissant des valeurs numériques représentatives des positions de l'objet mobile (1) en fonction du temps déterminé par le séquenceur (4), et des moyens de calcul (5) reliés au convertisseur (3) et au séquenceur (4) pour calculer les vitesses instantanées de l'objet pour différentes positions, caractérisé en ce que les moyens de calcul (5) comportent un calculateur (6) relié à une mémoire (7), au convertisseur (3) et au séquenceur (4) pour acquérir et enregistrer dans la mémoire (7) des valeurs numériques représentatives d'intervalles de temps successifs égaux, fournies par le séquenceur (4), ainsi que des valeurs numériques correspondant respectivement aux distances parcourues par l'objet en déplacement durant ces intervalles de temps, la mémoire (7) contenant un premier programme dit de filtrage de valeurs numériques pour corriger parmi les valeurs celles qui correspondent à des fluctuations des valeurs numériques correspondant aux distances parcourues dont les fréquences sont supérieures à une fréquence de coupure prédéterminée, pour supprimer les bruits de mesure et un deuxième programme dit de différentiation, pour calculer les valeurs de vitesses instantanées de l'objet (1) à partir des valeurs numériques enregistrées et filtrées de distances et d'intervalles de temps.

2. Dispositif selon la revendication 1, caractérisé en ce que le séquenceur (4) comporte un compteur (8) et une horloge (9) reliées au calculateur (6) et reliés entre eux, les valeurs numériques correspondant auxdits intervalles de temps successifs égaux étant fixées à une valeur prédéterminée de manière que les distances théoriquement parcourues par l'objet en déplacement durant ces intervalles de temps correspondent à des valeurs numériques fixées indépendamment de la vitesse de déplacement de l'objet effectivement commandée, le compteur (8) commandant l'enregistrement de la mémoire (7), des valeurs numériques qui sont représentatives des distances parcourues par l'objet en déplacement durant ces intervalles de temps et qui sont délivrées par le convertisseur analogique-numérique (3).

## Patentansprüche

1. Vorrichtung zum Bestimmen der Werte der Momentangeschwindigkeiten eines beweglichen Objekts (1), enthaltend einen Aufnehmer (2) für die Position des beweglichen Objekts, der ein Analogsignal liefert, das für die Positionen des beweglichen Objekts repräsentativ ist, einen Analog/Digital-Wandler (3), der mit dem Aufnehmer verbunden ist und der digitale Werte liefert, die für die Positionen des beweglichen Objekts (1) in Abhängigkeit von dem Folgeschalter (4) repräsentativ sind, und Recheneinrichtungen (5), die mit dem Wandler (3) und dem Folgeschalter (4) verbunden sind, um die Momentangeschwindigkeiten des Objekts für verschiedene Positionen zu berechnen, dadurch gekennzeichnet, daß die Recheneinrichtungen (5) einen Rechner (6) enthalten, der mit einem Speicher (7), dem Wandler (3) und dem Folgeschalter (4) verbunden ist, um in dem Speicher (7) digitale Werte zu ermitteln und einzuspeichern, die für gleiche aufeinanderfolgende Zeitintervalle repräsentativ sind und von dem Folgeschalter (4) geliefert werden, sowie digitale Werte, die jeweils von dem Objekt bei der Bewegung während dieser Zeitintervalle zurückgelegten Distanzen entsprechen, wobei der Speicher (7) ein erstes Programm enthält, das Filterprogramm für die digitalen Werte genannt wird, um unter den Werten jene zu korrigieren, die Schwankungen der digitalen Werte entsprechend den zurückgelegten Distanzen entsprechen, deren Frequenzen höher als eine vorbestimmte Grenzfrequenz sind, um das Meßrauschen zu unterdrücken, und ein zweites Programm enthält, das Differenzierungsprogramm genannt wird, um die Werte der Momentangeschwindigkeiten des Objekts (1) aus den gespeicherten und gefilterten digitalen Werten der Distanzen und Zeitintervalle zu berechnen.

2. Vorrichtung nach Anspruch 1, dadurch gekennzeichnet, daß der Folgeschalter (4) einen Zähler (8) und eine Taktquelle (8) enthält, die mit dem Rechner (6) und untereinander verbunden sind, wobei die digitalen Werte, die den aufeinanderfolgenden, gleichen Zeitintervallen entsprechen, auf einen vorbestimmten Wert derart festgelegt sind, daß die von dem Objekt bei der Bewegung während dieser Zeitintervalle theoretisch zurückgelegten Distanzen digitalen Werten entsprechen, die unabhängig von der effektiv gesteuerten Bewegungsgeschwindigkeit des Objekts festgelegt sind, wobei der Zähler (8) die Speicherung digitaler Werte in den Speicher (7) steuert, die für die während der Bewegung des Objekts in diesen Zeitintervallen zurückgelegten Distanzen repräsentativ sind und die von dem Analog/Digital-Wandler (3) geliefert werden.

## Claims

1. Device for determining the values of the instantaneous speeds of a moving object (1), comprising a sensor (2) of position of the moving object supplying an analogue signal representing the positions of the moving object, an analogue-digital converter (3) connected to the sensor, the converter (3) supplying digital values representing the positions of the moving object (1) as a function of time determined by the sequencer (4), and calculating means (5) connected to the converter (3) and to the sequencer (4) for calculating the instantaneous speeds of the object for various positions, characterised in that the calculating means (5) comprise a calculator (6) connected to a memory (7), to the converter (3) and to the sequencer (4) for capturing and recording in the memory (7) digital values, supplied by the sequencer (4), representing equal successive time intervals, together with digital values corresponding respectively to the distances travelled by the displacing object during these time intervals, the memory (7) containing a first so-called digital-value filtering program for correcting, among the values, those which correspond to fluctuations in the digital values corresponding to the distances travelled whose frequencies are greater than a predetermined cutoff frequency, in order to suppress the measurement noise, and a second so-called differentiating program for calculating the instantaneous speed values of the object (1) on the basis of the recorded and filtered digital values of distances and of time intervals.

2. Device according to Claim 1, characterised in that the sequencer (4) comprises a counter (8) and a clock (9) which are connected to the calculator (6) and are interconnected, the digital values corresponding to the said equal successive time intervals being fixed at a predetermined value in a manner such that the distances theoretically travelled by the displacing object during these time intervals correspond to digital values fixed independently of the effectively controlled speed of displacement of the object, the counter (8) controlling the recording by the memory (7), of the digital values which represent the distances travelled by the displacing object during these time intervals, and which are delivered by the analogue-digital converter (3).

FIG. 1

FIG. 2

$$Aa$$

$$\Omega p \qquad \Omega a \qquad \Omega s = \frac{2\pi}{v.T}$$